# EUROPÄISCHE PATENTANMELDUNG

(11) **EP 1 750 153 A1**
(43) Veröffentlichungstag der Anmeldung: **07.02.2007**
(21) Anmeldenummer: 05016758.4
(22) Anmeldetag: 02.08.2005
(51) Int. Cl.: G02B 7/182, G02B 7/00, B23K 26/04, G02B 26/08

(54) **Vorrichtung zur Neigungsverstellung eines Spiegels einer Laserbearbeitungsmaschine**

(71) Anmelder: TRUMPF Maschinen Grüsch AG, 7214 Grüsch (CH)
(72) Erfinder: Schmid, Andreas, Plainville CT 06062 (US)
(74) Vertreter: Kohler Schmid Möbus

(57) **Zusammenfassung**

Eine Vorrichtung (1) zur Neigungsverstellung eines Umlenkspiegels (33) einer Laserbearbeitungsmaschine (21) umfasst ein am Maschinenrahmen (32) fest anordenbares erstes Vorrichtungsteil (2) und ein mit diesem Vorrichtungsteil (2) beweglich verbundenes zweites Vorrichtungsteil (3). Der Umlenkspiegel (33) ist an dem zweiten Vorrichtungsteil (3) angebracht. Es ist eine Regeleinheit mit einem Neigungssensor (5), einer Elektronik (7) und einem Getriebemotor (8) vorgesehen.

## Beschreibung

Die vorliegende Erfindung betrifft eine Vorrichtung zur Neigungsverstellung eines Spiegels einer Laserbearbeitungsmaschine.

Laserbearbeitungsmaschinen sind in der Regel schwankenden Umgebungseinflüssen, z.B. Temperaturschwankungen, ausgesetzt. Aufgrund dieser Einflüsse kann es vorkommen, dass sich der Maschinenrahmen der Laserbearbeitungsmaschine verzieht oder verformt. Infolgedessen kann sich die Neigung eines Umlenkspiegels der Laserbearbeitungsmaschine verändern. Es kommt zu einer Fehljustierung des Laserstrahls, sog. "Laserstrahl-Pointing".

Für die Korrektur der Fehlneigung des Umlenkspiegels sind manuelle Vorrichtungen zur Neigungsverstellung des Umlenkspiegels bekannt. Bekannte Vorrichtungen umfassen eine Wasserwaage und eine Stellschraube, um den Umlenkspiegel in seiner Neigung zu verstellen.

Demgegenüber ist es ist die Aufgabe der vorliegenden Erfindung, eine Vorrichtung der eingangs genannten Art dahingehend weiterzubilden, dass eine automatische Korrektur der Neigungsverstellung des Umlenkspiegels ermöglicht wird.

Diese Aufgabe wird erfindungsgemäß durch eine Vorrichtung der eingangs genannten Art gelöst, die ein am Maschinenrahmen fest anordenbares erstes Vorrichtungsteil und ein mit diesem Vorrichtungsteil beweglich verbundenes zweites Vorrichtungsteil umfasst, wobei der Umlenkspiegel an dem zweiten Vorrichtungsteil angebracht ist, wobei eine Regeleinheit mit einem Neigungssensor, einer Elektronik und einem Getriebemotor vorgesehen ist. Die Erfindung schlägt vor, die bekannte manuelle Verstelleinrichtung durch eine automatische Verstelleinrichtung zu ersetzen. In der automatischen Version wird die manuelle Verstelleinrichtung durch einen Neigungssensor und durch einen Getriebemotor ersetzt. Die vorhandene und bisher benötigte Wasserwaage kann weiterhin vom Anwender zur zusätzlichen optischen Kontrolle verwendet werden. Die Neigung wird durch den Neigungssensor automatisch erfasst. Der erfasste Neigungsfehler wird in der Auswerteeinheit (Elektronik) zu einer Stellgröße für den Getriebemotor umgewandelt, der dann eine Spindel antreibt.

Wenn Mittel zur Erfassung von Schwingungen des Maschinenrahmens vorgesehen sind und die Elektronik einen entsprechenden Filter aufweist, können Schwingungen ausgefiltert werden, welche Signale des Neigungssensors beeinflussen. Dies kann bei einer Weiterbildung der Erfindung dadurch erreicht werden, dass ein Schwellwert und ein Tiefpassfilter eingesetzt werden.

Ein bevorzugtes Ausführungsbeispiel der Erfindung wird anhand der schematischen Zeichnung erläutert. Es zeigt:
- **Figur 1**: eine Laserschneidmaschine;
- **Figur 2**: eine Vorrichtung zur automatischen Neigungsverstellung eines Umlenkspiegels der Laserschneidmaschine.

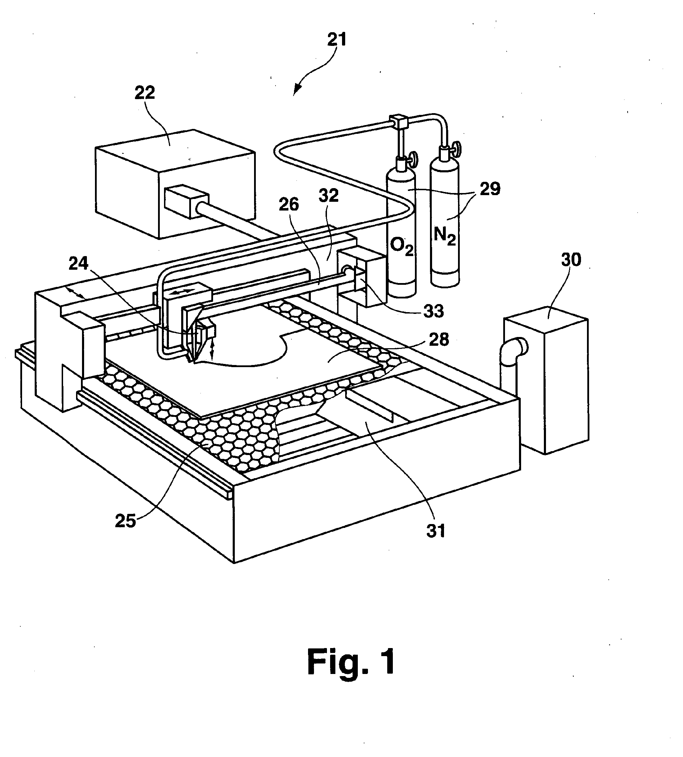

Aus der **Figur 1** ist der Aufbau einer Laserbearbeitungsanlage **21** zum Laserschneiden mit einem CO₂-Laser **22,** einem Laserbearbeitungskopf **24** und einer Werkstückauflage **25** ersichtlich. Ein erzeugter Laserstrahl **26** wird mithilfe von Umlenkspiegeln zum Laserbearbeitungskopf **24** geführt und mithilfe von Spiegeln auf ein Werkstück **28** gerichtet.

Bevor eine durchgängige Schnittfuge entsteht, muss der Laserstrahl **26** das Werkstück **28** durchdringen. Das Blech **28** muss an einer Stelle punktförmig geschmolzen oder oxidiert werden, und die Schmelze muss ausgeblasen werden.

Beim langsamen Einstechen mit einer Rampe kann die Laserleistung allmählich erhöht, reduziert und über einen bestimmten Zeitraum konstant gehalten werden, bis das Einstechloch erzeugt ist. Sowohl das Einstechen als auch das Laserschneiden werden durch Hinzufügen eines Gases unterstützt. Als Schneidgase **29** können Sauerstoff, Stickstoff, Druckluft und/oder anwendungsspezifische Gase eingesetzt werden. Welches Gas letztendlich verwendet wird, ist davon abhängig, welche Materialien geschnitten und welche Qualitätsansprüche an das Werkstück gestellt werden.

Dort, wo der Laserstrahl 26 auf das Blech 28 auftrifft, wird das Material geschmolzen und zum größten Teil oxidiert. Die entstandene Schmelze wird zusammen mit den Eisenoxiden ausgeblasen. Entstehende Partikel und Gase können mithilfe einer Absaugeinrichtung **30** aus einer Absaugkammer **31** abgesaugt werden.

Wenn sich der Maschinenrahmen **32** infolge von Umgebungseinflüssen verzieht oder verformt, ändert sich auch die Position eines Umlenkspiegels **33.** Dies bedeutet selbstverständlich eine Veränderung der Lage des Laserstrahls. Zur automatischen Korrektur dieser Verstellung des Umlenkspiegels 33 kann dort an dem Maschinenrahmen 32 die erfindungsgemäße Vorrichtung angeordnet sein.

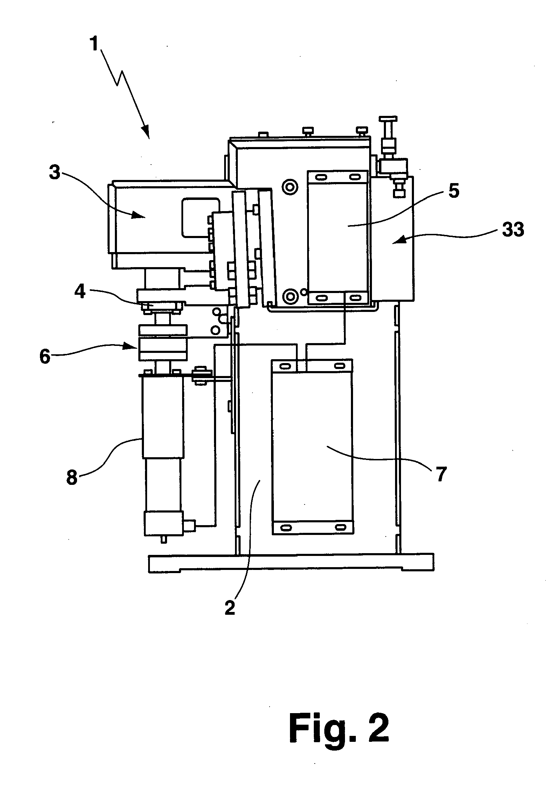

Bei der erfindungsgemäßen Vorrichtung **1** gemäß **Figur 2** handelt es sich um ein geregeltes System zur Pointingkompensation bei Flachbettlasermaschinen. Das Laserstrahl-Pointing wird zu einem großen Teil durch thermische Deformationen des linken Seitenträgers hervorgerufen. Auf diesem Seitenträger befindet sich auch der 175°-Umlenkspiegel, der aufgrund der Verformung des Seitenträgers abkippt. Wegen der Neigungsänderung des Spiegels ändert sich auch die Richtung des umgelenkten Laserstrahls, und es ergibt sich ein Pointing.

Mithilfe der Vorrichtung 1 wird das Abkippen des Spiegels automatisch kompensiert. Dies geschieht dadurch, dass die Neigung des Spiegels mit einer Toleranz von ± 0.02 mm/m auf einem konstanten Wert gehalten wird.

Die Vorrichtung 1 umfasst einen am Maschinenrahmen 32 fest angeordnetes erstes Vorrichtungsteil **2** und ein zweites Vorrichtungsteil **3,** das beweglich mit dem ersten Vorrichtungsteil 2 verbunden ist. Das erste Vorrichtungsteil 2 kann auch in den Maschinenrahmen 32 integriert sein. An dem zweiten Vorrichtungsteil 3 ist der Umlenkspiegel angebracht. Mittels eines Gelenkes und einer Differenzspindel **4** kann das Vorrichtungsteil 3 auch manuell verstellt werden. Die Differenzspindel 4 kann auch am Maschinenrahmen angebracht sein. Zur Regelung der Verstellung des Vorrichtungsteils 3 sind ein Neigungssensor **5,** eine Elektronik **7,** eine Kupplung **6** und ein Getriebemotor **8** vorgesehen. Mithilfe der Kupplung 6 werden ein Achsversatz und Fluchtungsfehler zwischen Differenzspindel 4 und Getriebemotor 8 ausgeglichen. Der Neigungssensor 5 kann die Neigung des Vorrichtungsteils 3 erfassen. Mithilfe der Elektronik 7 lässt sich der Istwert mit einem Sollwert vergleichen. Die Elektronik 7 steuert den Getriebemotor 8, so dass durch die Verschiebung des Vorrichtungsteils 3 eine Kompensation der Neigungsverstellung des Umlenkspiegels 33 automatisch durchgeführt wird. Die Regelung erfolgt, wenn ein für die jeweilige Maschine spezifischer Neigungsfehler überschritten wird (Schwellwert) und der mittlere Neigungsfehler über eine vorgegebene Zeit überschritten wird (Tiefpassfilter). Auf diese Weise wird sichergestellt, dass kleine und/oder kurzfristige Störungen, wie z. B. Schwingungen des Maschinenrahmens, nicht nachgeregelt werden.

## Patentansprüche

1. Vorrichtung (1) zur Neigungsverstellung eines Umlenkspiegels (33) einer Laserbearbeitungsmaschine (21) mit einem am Maschinenrahmen (32) fest anordenbaren ersten Vorrichtungsteil (2) und einem mit diesem Vorrichtungsteil (2) beweglich verbundenen zweiten Vorrichtungsteil (3), wobei der Umlenkspiegel (33) an dem zweiten Vorrichtungsteil (3) angebracht ist, wobei eine Regeleinheit mit einem Neigungssensor (5), einer Elektronik (7) und einem Getriebemotor (8) vorgesehen ist.

2. Vorrichtung nach Anspruch 1, **dadurch gekennzeichnet, dass** Mittel zur Erfassung von Schwingungen des Maschinenrahmens vorgesehen sind und die Elektronik einen entsprechenden Filter aufweist.

3. Vorrichtung nach Anspruch 1 oder 2, **dadurch gekennzeichnet, dass** die Regelneinheit derart ausgebildet ist, dass die Regelung erfolgt, wenn ein für die jeweilige Maschine spezifischer Neigungsfehler (Schwellwert) und der mittlere Neigungsfehler über eine vorgegebene Zeit überschritten werden (Tiefpassfilter).
